# EUROPÄISCHE PATENTSCHRIFT

(11) **EP 0 791 773 B1**
(45) Veröffentlichungstag und Bekanntmachung des Hinweises auf die Patenterteilung: **24.03.1999**
(21) Anmeldenummer: 96112595.2
(22) Anmeldetag: 03.08.1996
(51) Int. Cl.: F16L 5/02

(54) **Rohrverbindung von zwei metallischen Rohrenden**
Pipe connection of two metallic pipe ends
Raccord de tuyaux de deux embouts métalliques

(30) Priorität: 11.08.1995 DE 19529560
(43) Veröffentlichungstag der Anmeldung: 27.08.1997
(73) Patentinhaber: WIELAND-WERKE AG, 89079 Ulm (DE)
(72) Erfinder: Geier, Hermann, Dipl.-Ing., 88441 Mittelbiberach (DE); Gschaider, Johann, Dipl.-Ing., 89278 Nersingen-Strass (DE)

(56) Entgegenhaltungen:
- FR-A- 2 140 929
- GB-A- 1 300 518
- GB-A- 2 147 073
- US-A- 3 031 212

## Beschreibung

Die Erfindung betrifft eine Rohrverbindung von zwei Rohrenden nach dem Oberbegriff des Anspruchs 1.

Bekannt sind solche Rohrverbindungen in der Installationstechnik. Dort werden Formteile verwendet, die nach unterschiedlichen Verfahren hergestellt werden. Allen Formteilen ist gemeinsam, daß sie ein besonderes Bauteil darstellen, welches mit einem metallischen Rohrende durch Schrauben, Kleben, Löten oder Schweißen verbunden werden muß (vgl. beispielsweise Wieland-Prospekt: "Rippenrohr-Wärmeaustauscher/Baureihe WRW", Ausgabe 3/92).

Ein erheblicher Nachteil dieser Verbindungstechnik entsteht durch die aufwendige Verbindung und die oft notwendige Reinigung. Zusätzlich ist eine Prüfung auf Dichtheit erforderlich, was entsprechend kostenintensiv ist.

Aufgabe der Erfindung ist es daher, eine Rohrverbindung der genannten Art so auszugestalten, daß sie die geschilderten Nachteile vermeidet und gleichzeitig möglichst einfach herstellbar ist.

Die Aufgabe wird erfindungsgemäß durch die kennzeichnenden Merkmale des Anspruchs 1 gelöst.

Dadurch entsteht keine Verbindungsstelle mehr zwischen dem ersten Rohrende und der Behälterwand/dem Flansch. Somit entfallen mindestens zwei Arbeitsprozesse, nämlich das Verbinden und die Druckprüfung des Formteils mit dem ersten Rohrende. Gleichzeitig erübrigt sich eine Lagerhaltung für die Formteile.

Drei erfindungsgemäße Varianten ergeben sich nach den Merkmalen der Ansprüche 2 bis 4.

Nach einer besonderen Ausführungsform der Erfindung weisen die ringförmigen Nuten des ersten Rohrendes einen rechteckigen, kegeligen, trapezförmigen oder konischen Querschnitt auf.

Diese ringförmigen Nuten lassen sich vorzugsweise spanlos nach dem Rundknetverfahren bzw. spanend durch Drehen herstellen (vgl. beispielsweise den Aufsatz "Rundkneten - Anwendungsmöglichkeiten eines flexiblen Umformverfahrens" von F. Grau et al. in "Umformtechnik" 28 (1994), S. 207 - 209).

Die Verwendung der erfindungsgemäßen Rohrverbindung empfiehlt sich insbesondere bei Wasserspeichern, in denen eine Rohrwendel zur Warmwasserbereitung eingebracht und die Rohrenden der Rohrwendel als erste Rohrenden durch einen Flansch des Wasserspeichers gesteckt sind. Die Rohrenden der Wendel werden mit einem Halteelement befestigt. Der Dichtring übernimmt die Abdichtung gegenüber dem Speicherwasser.

Nach einer anderen erfindungsgemäßen Variante wird die Rohrverbindung bei Gasheizgeräten eingesetzt, in denen eine Rohrwendel als Wärmeaustauscher eingebracht ist und die Rohrenden der Rohrwendel als erste Rohrenden durch den Flansch des Gerätes gesteckt sind.

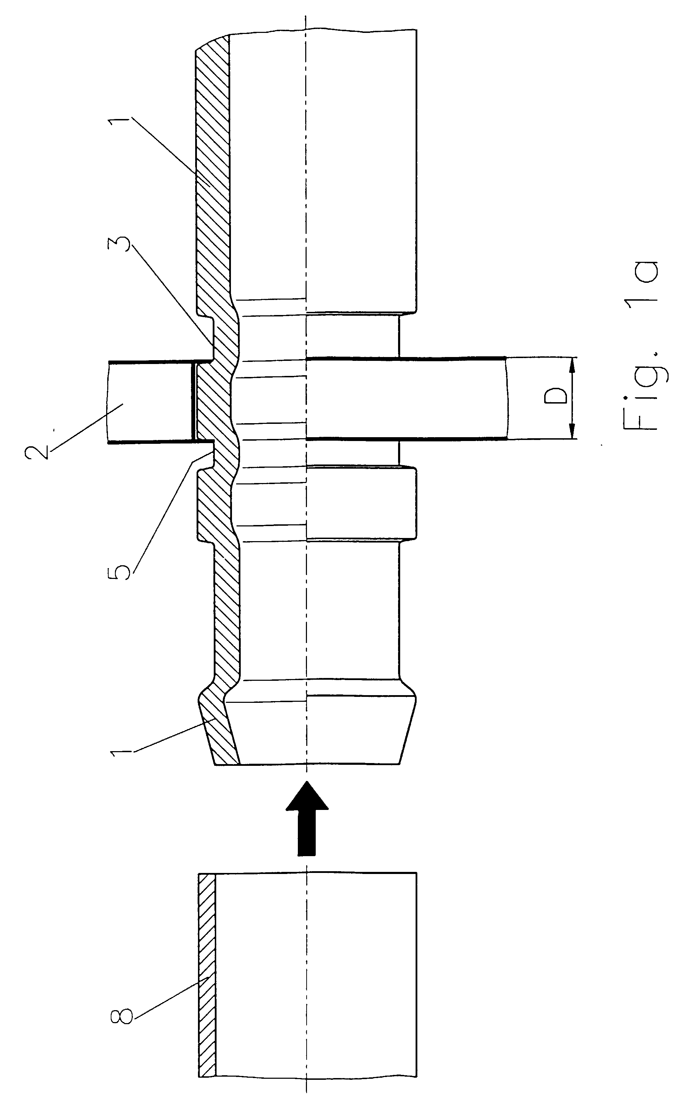

Die Erfindung wird anhand der Ausführungsbeispiele nach den Figuren 1a/b, 2 und 3a/b erläutert, welche jeweils im Schnitt und Ansicht dargestellt sind.

Bei den Rohrverbindungen nach den Figuren 1a/b, 2 und 3a/b ist bereits ein erstes, metallisches Rohrende 1 durch den Flansch 2 beispielsweise eines Wasserspeichers gesteckt. Das erste Rohrende 1 weist eine ringförmige Dichtungsnut 3 zur Aufnahme einer Dichtung 4 und eine ringförmige Sicherungsnut 5 zur Aufnahme eines Halteelements 6 auf, deren Abstand der Dicke D des Flansches 2 angepaßt ist.

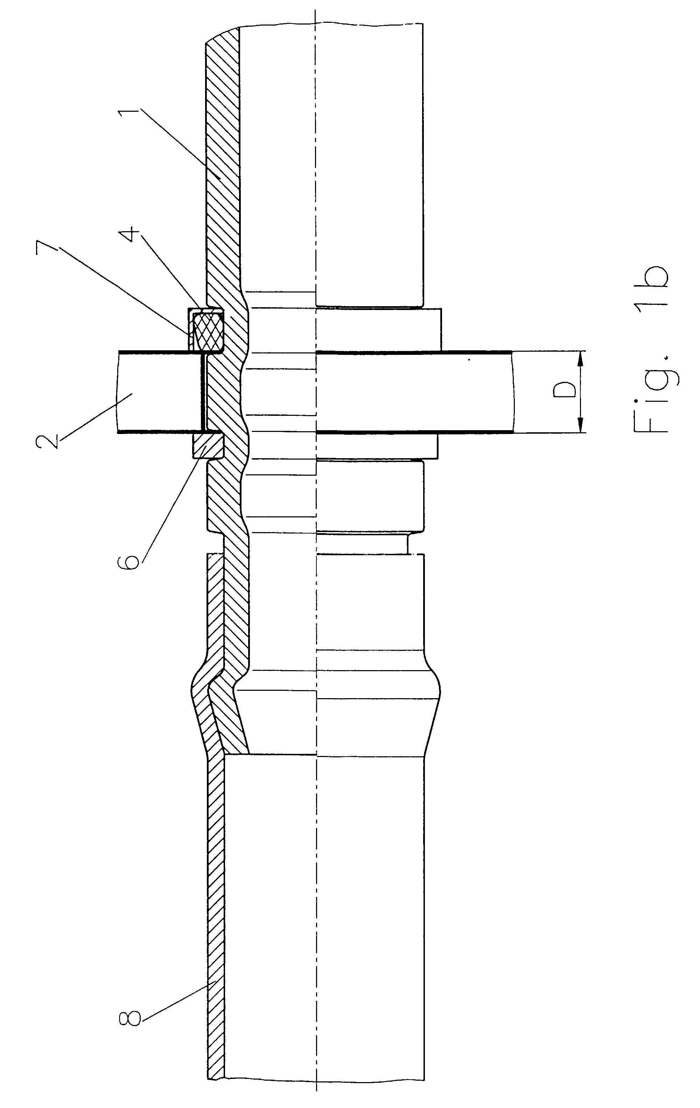

Gemäß Figur 1b ist zusätzlich zur Dichtung 4 ein Metallstützring 7 zur Verbesserung der Stabilität eingebracht. Der unmittelbare Endbereich 1' des ersten Rohrendes 1 ist konisch ausgebildet zur Aufnahme eines zweiten Rohrendes 8 in Form eines flexiblen Schlauches, der auf verschiedene Arten gehalten werden kann.

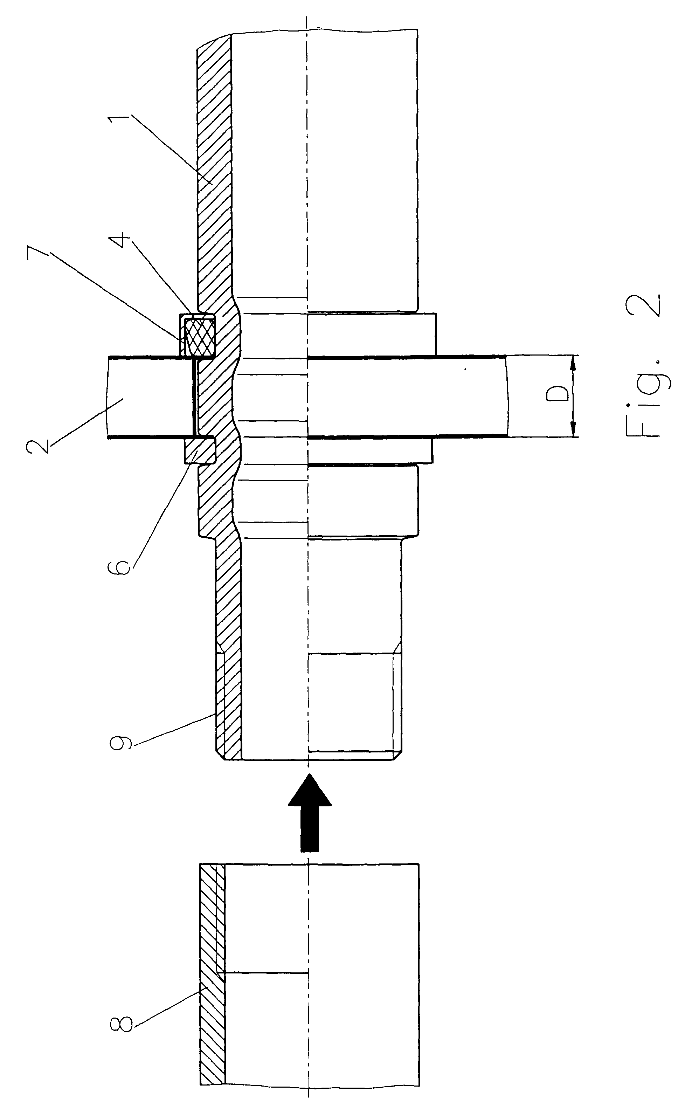

Gemäß Figur 2 weist der unmittelbare Endbereich 1' des ersten Rohrendes 1 ein Gewinde 9 auf, auf das ein zweites, metallisches Rohrende 8 aufgeschraubt werden kann.

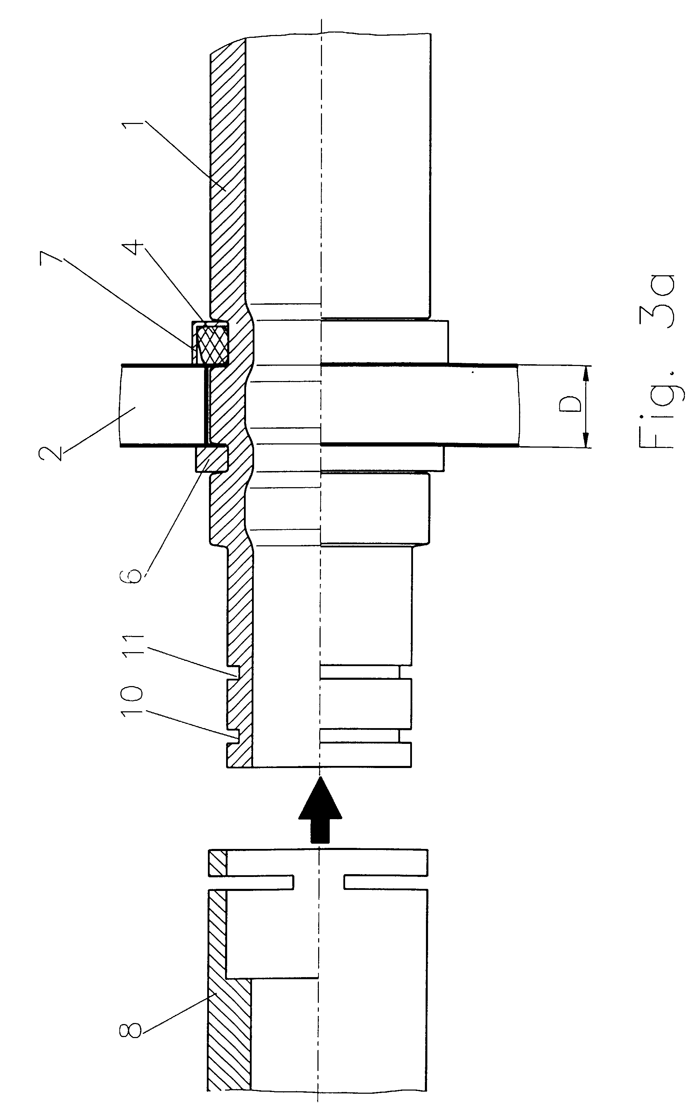

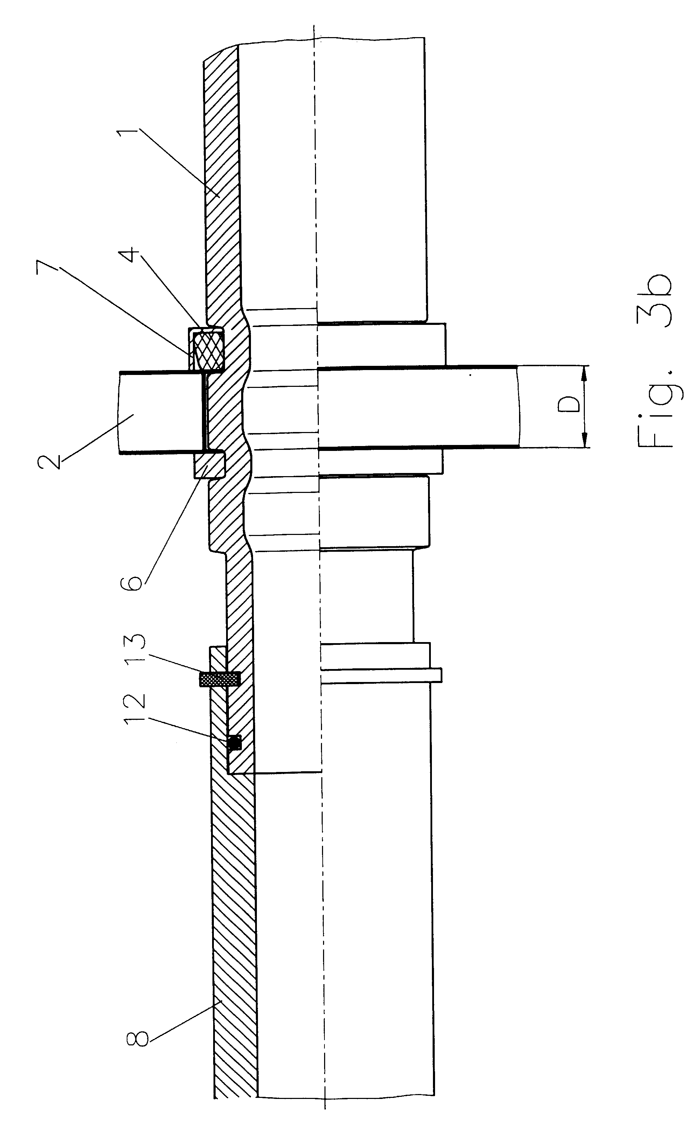

Nach Figur 3a weist der unmittelbare Endbereich 1' des ersten Rohrendes 1 zusätzlich zwei ringförmige Nuten 10, 11 zur Aufnahme eines zweiten, metallischen Rohrendes 8 in Form eines Steckverbinders auf. Nach Figur 3b erfolgt die Abdichtung durch einen O-Ring 12 in der ringförmigen Nut 10. Gesichert wird der Steckverbinder durch einen Federring 13.

## Patentansprüche

1. Rohrverbindung von zwei Rohrenden (1, 8), wobei das erste, metallische Rohrende (1) eine Behälterwand/einen Flansch (2) oder dgl. durchtritt und gegenüber dieser/diesem abgedichtet ist,
dadurch gekennzeichnet,
daß das erste Rohrende (1) eine ringförmige Dichtnut (3) zur Aufnahme einer Dichtung (4) und eine ringförmige Sicherungsnut (5) zur Aufnahme eines Halteelements (6) aufweist und
daß der Abstand zwischen den Nuten (3, 5) der Dicke D der Behälterwand/des Flansches (2) sowie die Ausbildung des unmittelbaren Endbereichs (1') des ersten Rohrendes (1) der gewählten Form des zweiten Rohrendes (8) angepaßt ist.

2. Rohrverbindung nach Anspruch 1, dadurch gekennzeichnet, daß der unmittelbare Endbereich (1') konisch ausgebildet ist zur Aufnahme eines zweiten Rohrendes (8) in Form eines flexiblen Schlauches.

3. Rohrverbindung nach Anspruch 1, dadurch gekennzeichnet, daß der unmittelbare Endbereich (1') ein Gewinde (9) aufweist, auf das ein zweites Rohrende (8) aufgeschraubt ist.

4. Rohrverbindung nach Anspruch 1, dadurch gekennzeichnet, daß der unmittelbare Endbereich (1') zwei ringförmige Nuten (10, 11) aufweist zur Aufnahme eines zweiten Rohrendes (8) in Form eines Steckverbinders.

5. Rohrverbindung nach einem oder mehreren der Ansprüche 1 bis 4, dadurch gekennzeichnet,
daß die ringförmigen Nuten (3, 5, 10, 11) des ersten Rohrendes (1) einen rechteckigen, kegeligen, trapezförmigen oder konischen Querschnitt aufweisen.

6. Rohrverbindung nach einem oder mehreren der Ansprüche 1 bis 4,
dadurch gekennzeichnet,
daß die Nuten (3, 5, 10, 11) spanlos nach dem Rundknetverfahren bzw. spanend durch Drehen erzeugt sind.

7. Verwendung der Rohrverbindung nach einem oder mehreren der Ansprüche 1 bis 4 bei Wasserspeichern, in denen eine Rohrwendel zur Warmwasserbereitung eingebracht und die Rohrenden der Rohrwendel als erste Rohrenden (1) durch einen Flansch (2) des Wasserspeichers gesteckt sind.

8. Verwendung der Rohrverbindung nach einem oder mehreren der Ansprüche 1 bis 4 bei Gasheizgeräten, in denen eine Rohrwendel als Wärmeaustauscher eingebracht ist und die Rohrenden der Rohrwendel als erste Rohrenden (1) durch einen Flansch (2) des Gerätes gesteckt sind.

## Claims

1. Pipe connection of two pipe ends (1, 8), wherein the first, metallic, pipe end (1) passes through a container wall/flange (2) or the like and is sealed relative thereto, characterised in that the first pipe end (1) has an annular scaling groove (3) for receiving a seal (4), and an annular securing groove (5) for receiving a holding element (6) and in that the distance between the grooves (3, 5) is adapted to the thickness D of the container wall/flange (2), and the construction of the immediate end region (1') of the first pipe end (1) is adapted to the solected form of the second pipe end (8).

2. Pipe connection according to claim 1, characterised in that the immediate end region (1') is conical in order to receive a second pipe end (8) in the form of a flexible tube.

3. Pipe connection according to claim 1, characterised in that the immediate end region (1') has a thread (9) onto which a second pipe end (8) is screwed.

4. Pipe connection according to claim 1, characterised in that the immediate end region (1' ) has two annular grooves (10, 11) for receiving a second pipe end (8) in the form of a plug-in connector.

5. Pipe connection according to one or more of claims 1 to 4, characterised in that the annular grooves (3, 5, 10, 11) of the first pipe end (1) have a rectangular, tapered, trapezoidal or conical cross-section.

6. Pipe connection according to one or more of claims 1 to 4, characterised in that the grooves (3, 5, 10, 11) are produced without material-removing cutting by the rotary swaging process or with material-removing cutting by turning.

7. Use of the pipe connection according to one or more of claims 1 to 4 in water storage tanks in which coiled piping is introduced for water heating and the pipe ends of the coiled piping are pushed, as first pipe ends (1), through a flange (2) of the water storage tank.

8. Use of the pipe connection according to one or more of claims 1 to 4 in gas heating devices in which coiled pining is introduced as a heat exchanger and the pipe ends of the coiled piping are pushed, as first pipe ends (1), through a flange (2) of the device.

## Revendications

1. Jonction tubulaire pour deux extrémités de tubes (1, 8), dans laquelle la première extrémité de tube métallique (1) traverse une paroi de récipient/une bride (2) ou similaire, et est étanchée par rapport à celle-ci,
caractérisée en ce que
la première extrémité de tube (1) comporte une gorge d'étanchéité annulaire (3) pour recevoir un joint (4), et une gorge de fixation annulaire (5) pour recevoir un élément de maintien (6), et
la distance entre les gorges (3, 5) est adaptée à l'épaisseur D de la paroi de récipient/de la bride (2), de même que la réalisation de la région terminale immédiate (1') de la première extrémité de tube (1) est adaptée à la forme choisie pour la deuxième extrémité de tube (8).

2. Jonction tubulaire selon la revendication 1, caractérisée en ce que la région terminale immédiate (1') est réalisée sous forme conique pour recevoir une deuxième extrémité de tube (8) sous la forme d'un tuyau flexible.

3. Jonction tubulaire selon la revendication 1, caractérisée en ce que la région terminale immédiate (1') présente un pas de vis (9) sur lequel est vissée une deuxième extrémité de tube (8).

4. Jonction tubulaire selon la revendication 1, caractérisée en ce que la région terminale immédiate (1') comporte deux gorges annulaires (10, 11) pour recevoir une deuxième extrémité de tube (8) sous la forme d'une jonction à enfichage.

5. Jonction tubulaire selon l'une ou plusieurs des revendications 1 à 4, caractérisée en ce que les gorges annulaires (3, 5, 10, 11) de la première extrémité de tube (1) présentent une section rectangulaire, conique, trapézoïdale ou bien conique.

6. Jonction tubulaire selon l'une ou plusieurs des revendications 1 à 4, caractérisée en ce que les gorges (3, 5, 10, 11) sont produites sans enlèvement de matière d'après le procédé de repoussage au tour, ou bien avec enlèvement de matière par tournage.

7. Application de la jonction tubulaire selon l'une ou plusieurs des revendications 1 à 4, dans des accumulateurs à eau dans lesquels est montée une spirale tubulaire pour la préparation d'eau chaude, et les extrémités de la spirale tubulaire sont enfichées en tant que premières extrémités de tube (1) à travers une bride (2) de l'accumulateur à eau.

8. Application de la jonction tubulaire selon l'une ou plusieurs des revendications 1 à 4, dans des appareils de chauffage à gaz dans lesquels est montée une spirale tubulaire en tant qu'échangeur de chaleur, et les extrémités de la spirale tubulaire sont enfichées en tant que premières extrémités de tube (1) à travers une bride (2) de l'appareil.
